# EUROPEAN PATENT SPECIFICATION

(11) **EP 1 633 995 B1**
(45) Date of publication and mention of the grant of the patent: **25.10.2006**
(21) Application number: 04743766.0
(22) Date of filing: 16.06.2004
(51) Int. Cl.: F16H 15/50, F16H 37/08

(54) **SPIRAL GEAR RACK FOR A MECHANICAL TORQUE CONVERTER CROSS-NOTING TO RELATED APPLICATIONS**
SCHRÄGZAHNSTANGE FÜR EINEN MECHANISCHEN DREHMOMENTWANDLER
CREMAILLERE EN SPIRALE POUR UN CONVERTISSEUR DE COUPLE MECANIQUE AVEC REFERENCE A DES APPLICATIONS ASSOCIEES

(30) Priority: 19.06.2003 US 464985
(43) Date of publication of application: 15.03.2006
(73) Proprietor: Borbolla Gonzalez, Teodoro Rodrigo, Tlaquepaque, Jalisco 45602 (MX)
(72) Inventor: Borbolla Gonzalez, Teodoro Rodrigo, Tlaquepaque, Jalisco 45602 (MX)
(74) Representative: Petraz, Gilberto Luigi
(86) International application number: PCT/IB2004/002005
(87) International publication number: WO 2004/111495

(56) References cited:
- EP-A- 1 239 186
- US-A- 3 241 382
- US-A- 4 630 495
- PATENT ABSTRACTS OF JAPAN vol. 016, no. 047 (M-1208), 6 February 1992 (1992-02-06) & JP 03 249459 A (SUZUKI MOTOR CORP), 7 November 1991 (1991-11-07)

## Description

### CROSS-NOTING TO RELATED APPLICATIONS

This invention is primarily intended for use as an energy transformation device in the automotive industry; i.e. transmission systems. The device may also be used on any appliance that uses a power plant or requires a constant speed drive.

### BACKGROUND

The invention offers a new, simpler assembly of an Infinitely Variable Transmission (IVT), of which there are several designs. Some designs base their operation on the change of speed of some component (normally the sun gear) of a planetary gearing system, to provide variable speed on the output shaft that is integrated directly or indirectly to another one of it's components (normally the annular gear), as is the case of US Patent No. 5,564,998. This change is regulated by a variator mechanism which employs sliding rollers in one or many pairs of thoroidal discs such as disclosed in US Patent No.5,395,292 or through the use of belts that operate in poles with varying diameters as described in US Patent No. 4,553,450. Another design uses a torque converter in which hydraulic fluid is used between the turbine and the pump to vary it's traction as illustrated in US Patent No. 4,644,821. There also exists the continually variable transmission like the one disclosed in US Patent No. 4,229,985 that uses a system of conic rollers with an intermediate ring to modulate speed by varying its angle, or a system of rollers which are displaced along a conic impeller to vary the contact diameter and though vary the outlet speed as is the case of the closest prior art document EP-A-1,239,186.

In neither cases it is obtained a positive traction, so that would cause skidding or friction of the involved elements, and a great loss of energy that affects in a more or less degree the efficiency and reliability of the transmission drive, causing the parts to be prone to wear out and excessive maintenance requirements.

### BRIEF DESCRIPTION OF THE FIGURES

Fig 1. is a sectional view of the transmission.
Fig. 2. is a simplified figure of the back side view of one position of the transmission.
Fig. 3. is a sectional view of de cyclical change of sequence.
Fig.4. is a side view of the contact point between the satellite gears and the gear rack along the cyclic displacement.
Fig.5.is a transversal view of the transmission showing the longitudinal displacement of the receiving system, along the gear rack spire.

### SUMMARY OF THE INVENTION

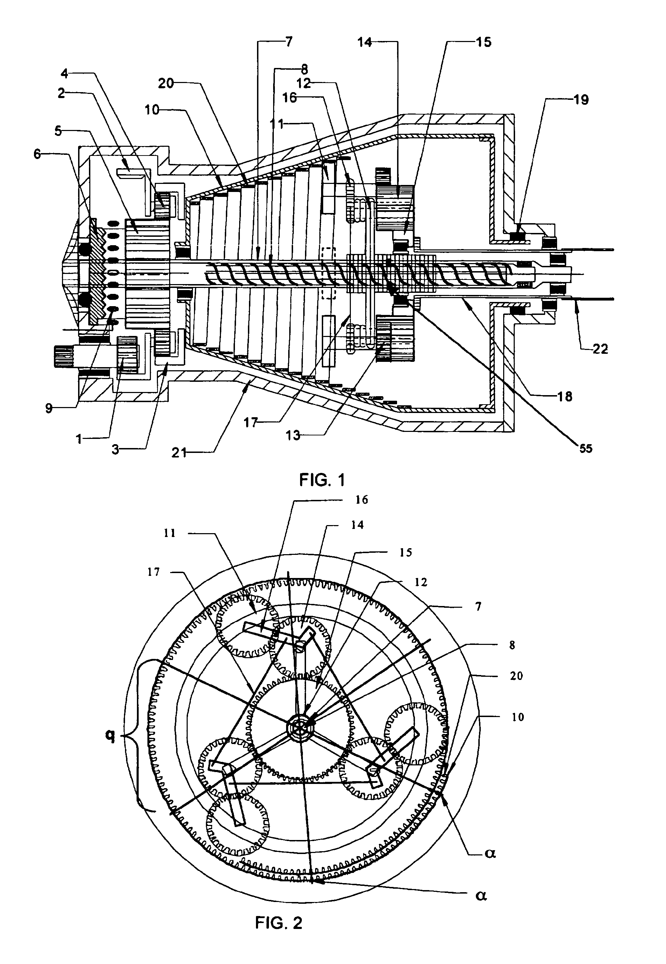

The invention provides a conic spiral gear system that may be used with any kind of mechanism requiring a variable output relation, and consists of an input gear (1) with an annular gear mounted on a planet carrier (2), a second annular gear (3) and an unidirectional clutch (19) mounted on a cylindrical impeller of increasing diameter (10) a set of three or more planets (4) a sun gear (5) a lock plate (6), a primary traction and control shaft (7) and a double coupling shaft (22).a spiral rack (20) a receiving system (11, 12, 13, 14, 15, 16, 17, and 18) that comprises a composed planetary system where the satellite gears (11) move radially to engage the gear rack (20) either directly, or by using the rear shafted gears (13), to the planets (14), that transmit traction to the central gear (15) and to the outer shaft (18) under variable speed depending on impeller diameter in which they are located, so that if power is constant, the torque changes at an inverse ratio in respect to said speed. (Fig. 1).

The sequence of the transmission starts at the input gear (1) that reduces the engine R.P.M. and transmits it to the planet carrier (2), to the planets (4), and to the second annular gear (3), as demanded by the accelerator, afterwards the movement passes to the mechanical torque converter which consists of a cylindrical impeller of increasing diameter (10), that incorporates a gear rack (20) in its inner surface, said impeller has a restricted rotation as it is coupled to an unidirectional clutch (19), in order to rotate solely in a "screw-in" rack direction, this rack is arranged annularly in spiral way, and the teeth of this are equally spaced to each other, so that the rack (20) can accept the same satellite (11) in any position along its perimeter, and certain number of teeth per spire may be removed to clear satellite gears (specially in small impeller diameters), as the sun gear keeps the planets in sequence, the continuity of movement of them will not be interrupted.

The deployment control of the traction receiving system, works as follows: The sun gear is engaged with he lock plate (6) which has several stops to halt the movement of the sun gear at determined angular positions (α), perceives the torque's reaction delivered to the transmission, and surpass the sensor spring (9) force, making the primary traction and control shaft (7) to spin a certain amount of rotations depending on the reaction force, and through the hellicoidal groove and the splines of the central bar, will deploy the positioning spider (12) lengthwise. In this manner the receiving system (11, 12, 13, 14, 15, 16, 17, and 18) moves axially through the primary traction and control shaft (7), up to the required position to maintain the said RPM's of the conic impeller.

### DETAILED DESCRIPTION OF THE INVENTION

The modulation of the variable pitch rate operates as follows: The primary transmission and control shaft (7) is engaged to the positioning spider (12) by means of pins (55) sliding through the grooves, which will deploy to a distance corresponding to the received torque. Meanwhile, the conic impeller (10) fixed to annular gear (3) is released from the unidirectional clutch (19) -as it spins in a screw in direction, to transmit the traction by means of the gear rack (20) to the satellite gears (11), engaged by theirs rear shafted gears (13) to a second planetary system (14) mounted on the positioning spider (12) by the pivoting arms (18), and are engaged to the central gear (15) that is coupled to the outer shaft (18) and to the double coupling shaft (22), which is the output of the transmission, operating with a variable speed rate, according to the contact diameter with the spiral gear rack (20). (Fig. 1).

It is to be noted that, when referring to the rack (20) or spiral diameter, it is meant an average diameter of a spire, since the spiral does not have a fixed diameter.

The rear epicyclical gear system which is found in the inner region of the impeller (10), mounted on a spider (12) moves over the cone's axis along the primary traction and control shaft's slot (7), which is concentric to a central splined bar (8), that has helical splines along its axis, and typically is fixed to the case (21), in such a way that the gear system can be arranged in a radial or longitudinal position by said primary traction and control shaft (7) which is rotated by the sensor spring (9) to the next sun gear stop, and this way, at any longitudinal position of the satellites (11) match with a given impeller's (10) diameter and an angular position. (Fig. 2).

The continuity principle on the gearing sequence between spiral rack (20) and the satellites (11) is based on permanently maintaining the relative position of the satellite's fore part and each spire starting point. This is achieved by providing that each time the rack (20) goes a turn further, the number of tooth increase in a given amount, in such a way that all satellites (11) get into in the rack (20) at the same tooth for each given position (α) of the receiving system (11, 12, 13, 14, 15, 16, 17, and 18), and the last tooth of a spire will always be coincident with the starting point of the same spire.

On the periphery of each spire there will be some teeth coincident with other tooth of the previous spire (equivalent to the number of teeth that were increased), hence each spire will be segmented in a number of arcs (q) between said teeth, on which the receiving system (11, 12, 13, 14, 15, 16, 17, and 18) will transit only during the forward or backward movements to change position. However, the spire cyclic transition will only take place at the angular positions (α) where two teeth are aligned. (Fig. 2).

To vary the position of the receiving system (11, 12, 13, 14, 15, 16, 17, and 18), the whole system is run with the same advance pattern of the spire, so that the sequence is kept at the intermediate points (q) between said angular positions (α), and so that the satellite (11) advance is proportional to the augmenting or decreasing rotation of the spire perimeter. Therefore, when said displacement has the purpose to decrease the diameter, the rotation will be in the same rotation direction of the impeller (10), so that the gear will follow the rack (20) to keep its relative position when shifting to another spire, and so that the off-set teeth is not coincident with the changing position.

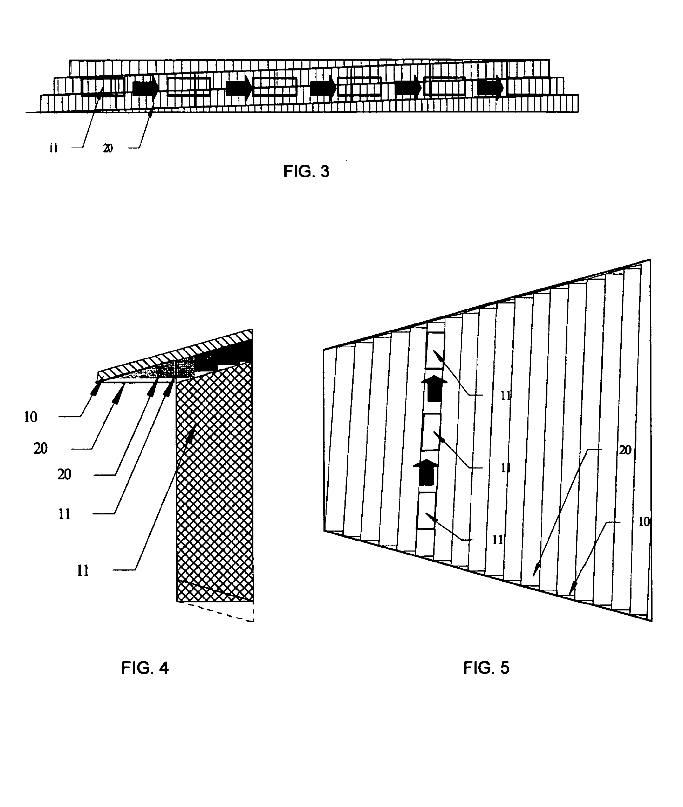

By means of the connection rods (17), the satellites (11) keep the same distance to the impeller's (10) axis, which is the shortest of all, while the rack's (20) radius will broaden at each revolution, because it transfers a rotation which "screws-in". In this way, the contact in a satellite (11) will be lost during the transition of the spiral's widest part where it is positioned to the narrowest part, that is, while the satellite changes the spire from the end to the beginning of the spiral which corresponds to the longitudinal position of the spider (12) where it is placed (Fig. 3). In clearing the satellite teeth during the cyclic change of the spiral, the spiral should have an increase in radius, from one spire to another, so that the teeth are disengaged each time the impeller (10) completes a revolution. The concept of continuous positive variable torque is based in that at least one satellite (11) from the receiving system (11, 12, 13, 14, 15, 16, 17, and 18) is in permanent contact with the impeller's rack (20) (Fig. 4).

Said cyclic change of the spiral by means of the lock plate (6) will be in given points (α) of the rack (20), so that the satellites (11) always make the spire change to the position where the first and last teeth of each impeller's (10) cross-sectional plane coincide where they are located, therefore there is no interference present due to the teeth off-setting in the way a Vernier operates. Consequently, the sensor spring (9) will cause said advancing rate to be at specific angular positions, which number of arches (q) is equivalent to the number of teeth increased by each spire, as a result, the greater the teeth increment is, the greater number of angular positions (α) will be, and as a consequence, the greater of transmission relations. (Fig. 3).

During the transit to increase or decrease the contact radius, the system will maintain its relative position to the impeller (10), to avoid making a spire change where said teeth do not coincide.

In order to synchronize the transition of the satellite (11) entering into the rack (20), the increment in the number of teeth will always be the same from one spire to another, and said satellites (11) will always keep the vector position which corresponds to each longitudinal distance in the impeller's (10) axis for the conditions in which it operates. Therefore, in order to modify the operation, the receiving system (11, 12, 13, 14, 15, 16, 17, and 18) will move over the primary traction and control shaft (7) as indicated before, continuing the advancing rate and rotation of the central splined bar (8), whose chord has a pitch equivalent to the rack (20) advancing rate (Fig. 5).

## Claims

1. A Spiral Gear Rack for a Mechanical Torque Converter, comprising:
a stationary housing (21);
a primary traction and control shaft (7) having slots
a cylindrical impeller of increasing diameter (10);
a double coupling shaft (22);
a lock plate (6);
a central splined bar (8) having helical splines, that is fixed to the housing (21);
an input gear (1) that receives motion from an engine;
an annular gear (2) meshing with said input gear (1);
a front epicyclical gear system comprising
a planet gear carrier fixed to said annular gear (2);
a set of three or more first planet gears (4) mounted on said planet carrier;
a second annular gear (3) engaging first planet gears (4) and coupled to said cylindrical impeller (10); and,
a sun gear (5) possessing a longitudinal axis and fixedly coupled to said primary traction and control shaft (7) to rotate therewith, and meshing with said first planet gears (4), and is locked to said lock plate (6),
a control system consisting of a sensor spring (9) hooked to said sun gear (5) and to the stationary housing.
a first unidirectional clutch (19) mounted on said cylindrical impeller (10) for locking to said housing (21) and releasing said cylindrical impeller;
a rear epicyclical gear system comprising:
satellite gears (11);
a set of several rear gears (13) connected by respective shafts to said satellite gears (11);
a set of several pivoting arms (16) that carries said rear gears and shafts (13);
a second set of several planet gears (14) engaged to said rear gears (13); a positioning spider (12) holding said pivoting arms (16) and said second set of planet gears, wherein said positioning spider (12) deployes along said primary traction and control shaft (7) through its slots by interaction of a pin (55) fixed to said spider with said slots and the splines of said helical splined bar (8);
a central gear (15) mounted on said positioning spider and engaging said second set of planet gears (14); and
an outer shaft (18) is fixed to said central gear (15), and is engaged to said double coupling shaft (22), which outputs torque from said torque converter; **characterized in that** a spiral gear rack (20) is circumferentially integrated to said cylindrical impeller (10);
the system further comprises connection rods (17), slaving said pivoting arms (16) with each other, and said satellite gears (11) meshing with said gear rack (20).

2. The Spiral Gear Rack for a Mechanical Torque Converter according to claim 1, wherein said primary traction and control shaft (7), input gear (1), first planet gears (4), satellites (11), rear gears and shafts (13), second planet gears (14) have their own axis which is parallel with each other.

3. The Spiral Gear Rack for a Mechanical Torque Converter according to claim 1, wherein said sun gear (5), annular gear (2), primary shaft (7), double coupling shaft (22), lock plate (6), first unidirectional clutch (19), cylindrical impeller (10), second annular gear (3), positioning spider (12), central splined bar (8), and said outer shaft (18), have a lengthwise axis that is common to all of them.

4. The Spiral Gear Rack for a Mechanical Torque Converter according to claim 1, where said cylindrical impeller and satellite system (11) is a geared system comprising:
A spiral rack (20) circumferentially integrated to said cylindrical impeller (10) inner surface,
a satellite gear system meshing with said gear rack (20), and linked to said rear (13) and shafts, and
connection rods (17), slaving the pivoting arms (16) with each other.

5. The Spiral Gear Rack for a Mechanical Torque Converter according to claim 6 1, wherein, said pivoting arms (16) pivot at the end of the arms of said spider (12) and are enslaved to each other by means of said connection rods (17), in order to maintain the same radius, and they are spring loaded to extend so that said satellites (11) engage to the spire of the nearest rack (20) having a three-dimensional vector position, specifically for each position of the advancing rate of the spider (12).

6. The Spiral Gear Rack for a Mechanical Torque Converter according to claim 1, wherein the satellites (11) are engaged to said gear rack (20), and cyclically change from the end of a spire to the beginning of it, at specific angular positions where the first and last spire teeth coincide, and several gear rack teeth may be detached without loosing the sequence, for being synchronized with the same central gear, transmitting the torque to the second epicyclical gear system, that is joined to said outer shaft (18), and to said double coupling shaft (22), which is the output of said torque converter.

## Patentansprüche

1. Schrägzahnstange für einen mechanischen Drehmomentwandler, die umfasst:
ein stationäres Gehäuse (21);
eine primäre Traktions- und Steuerwelle (7), die Schlitze besitzt;
einen zylindrischen Impeller mit zunehmendem Durchmesser (10);
eine Doppelverbindungswelle (22);
eine Verriegelungsplatte (6);
eine zentrale Keilwelle (8), die spiralförmige Keilnuten besitzt, die an dem Gehäuse (21) befestigt ist;
ein Antriebszahnrad (1), das eine Bewegung von einem Motor aufnimmt;
einen Zahnkranz (2), der mit dem Antriebszahnrad (1) in Eingriff steht;
ein vorderes, epizyklisches Zahnradsystem, das
einen Planetenzahnradträger, befestigt an dem Zahnkranz (2);
einen Satz von drei oder mehr ersten Pianetenxahnrädem (4), befestigt an dem Planetenträger;
aufweist;
einen zweiten Zahnkranz (3), der mit den ersten Planetenzahnrädern (4) in Eingriff steht und mit dem zylindrischen Impeller (10) verbunden ist; und
ein Sonnenzahnrad (5), das eine Längsachse besitzt und fest an der primären Traktions- und Steuerwelle (7) verbunden ist, um sich zusammen damit zu drehen und um mit den ersten Planetenzahnrädern (4) in Eingriff zu stehen, und an der Verriegelungsplatte (6) verrlegelt ist;
ein Steuersystem, das aus einer Sensorfeder (9), die an dem Sonnenzahnrad (5) und an dem stationären Gehäuse eingehakt ist, besteht;
eine erste, unidirektionale Kupplung (19), die an dem zylindrischen Impeller (10) befestigt ist, um das Gehäuse (21) zu verriegeln und den zylindrischen Impeller freizugeben;
ein hinteres, epizyklisches Zahnradsystem, das
Satellitenzahnräder (11);
einen Satz mit mehreren hinteren Zahnrädern (13), verbunden durch jeweilige Wellen mit den Satellitenzehnrädern (11);
einen Satz mit mehreren Schwenkarmen (16), die die hinteren Zahnräder und Wellen (13) tragen;
einen zweiten Satz mit mehreren Planetenzahnrädern (14), die mit den hinteren Zahnrädern (13) in Eingriff stehen;
aufweist;
eine Positionierungsspinne (12), die die Schwenkarme (16) und den zweiten Satz mit Planetenzahnrädern hält, wobei sich die Positionierungsspinne (12) entlang der primären Traktions- und Steuerwelle (7) durch deren Schlitze durch eine Wechselwirkung eines Stifts (55), befestigt an der Spinne, mit den Schlitzen und den Keilnuten der spiralförmigen Keilwelle (8) entfaltet;
ein zentrales Zahnrad (15), das an der Positionlerungsspinne montiert ist und mit dem zweiten Satz der Planetenzahnräder (14) in Eingriff steht; und
wobei eine äußere Welle (18) an dem zentralen Zahnrad (15) befestigt ist und mit der Doppelverbindungswelle (22) in Eingriff steht, die ein Drehmoment von dem Drehmomentwandler abgibt;
**dadurch gekennzeichnet, dass** eine Schrägzahnstange (20) umfangsmäßig an dem zylindrischen Impeller (10) Integriert ist;
wobei das System weiterhin Verbindungsstangen (17), die die Schwenkarme (16) gegeneinander stützen; und
die Satellitenzahnräder (11), die mit der Zahnstange (20) in Eingriff stehen; aufweist.

2. Schrägzahnstange für einen mechanischen Drehmomentwandler nach Anspruch 1, wobei die primäre Traktions- und Steuerwelle (7), das Antriebszahnrad (1), die ersten Planetenzahnräder (4), die Satelliten (11), die hinteren Zahnräder und Wellen (13), die zweiten Planetenzahnräder (14), ihre eigene Achse haben, die parallel zueinander liegen.

3. Schrägzahnstange für einen mechanischen Drehmomentwandler nach Anspruch 1, wobei das Sonnenzahnrad (5), der Zahnkranz (2), die primäre Welle (7), die Doppelverbindungswelle (22), die Verriegelungsplatte (6), die erste unidirektionale Kupplung (19), der zylindrische Impeller (10), der zweite Zahnkranz (3), die Positionierungsspinne (12), die zentrale Keilwelle (8) und die Abtriebswelle (18) eine Achse in Längsrichtung haben, die für alle davon gemeinsam ist.

4. Schrägzahnstange für einen mechanischen Drehmomentwandler nach Anspruch 1, wobei der zylindrische Impeller und das Satelittensystem (11) ein Zahnradsystem sind, das aufweist:
eine Schrägzahnstange (20), die umfangsmäßig an der inneren Fläche des zylindrischen Impellers (10) integriert ist;
ein Satellitenzahnradsystem, das mit der Zahnstange (20) in Eingriff steht und mit dem hinteren Zahnrad (13) und den Wellen verbunden Ist, und
Verbindungsstangen (17), die die Schwenkarme (16) gegeneinander stützen.

5. Schrägzahnstange für einen mechanischen Drehmomentwandler nach Anspruch 1, wobei sich die Schwenkarme (16) an dem Ende der Arme der Spinne (12) schwenken und miteinander mittels der Verbindungsstangen (17) zwangsverbunden sind, um denselben Radius beizubehalten, und wobei sie mittels Feder in einem solchen Umfang vorgespannt sind, dass die Satelliten (11) In die Spitze der kürzesten (nearest) Zahnstange (20) eingreifen, die eine dreidimensionale Vektorposition, spezifisch für jede Position der Vorschubrate der Spinne (12), besitzt.

6. Schrägzahnstange für einen mechanischen Drehmomentwandler nach Anspruch 1, wobei die Satelliten (11) mit der Zahnstange (20) In Eingriff stehen und sich zyklisch von dem Ende einer Spitze bis zu dem Beginn davon, unter spezifischen Winkelpositionen, ändern, wobei der erste und der letzte Spitzen-Zahn miteinander übereinstimmen und wobei mehrere Zahnstangenzähne weggenommen werden können, ohne die Folge zu verlieren, um mit demselben zentralen Zahnrad synchronisiert zu werden, wobei das Drehmoment auf das zweite epizyklische Zahnradsystem übertragen wird, das mit der Abtriebswelle (18) verbunden ist, und auf die Doppelverbindungswelle (22), die der Abtrieb des Drehmomentwandlers ist, übertragen wird.

## Revendications

1. Crémaillère en spirale pour un convertisseur de couple mécanique, comprenant :
un carter fixe (21) ;
un arbre primaire de traction et de commande (7) doté d'encoches ;
un rotor cylindrique de diamètre croissant (10) ;
un arbre d'accouplement double (22) ;
un plateau de blocage (6) ;
une barre centrale cannelée (8) dotée de cannelures en hélice et fixée au carter (21) ;
un pignon d'entrée (1) recevant le mouvement provenant d'un moteur ;
une couronne dentée (2) engrenant ledit pignon d'entrée (1) ;
un système d'engrenages épicycloïdal avant comprenant :
un porte-planétaires fixé à ladite couronne dentée (2) ;
un jeu de trois premiers pignons planétaires (4) ou davantage, montés sur ledit porte-planétaires ;
une seconde couronne dentée (3) s'engageant dans les premiers pignons planétaires (4) et couplée audit rotor cylindrique (10) ; et,
un pignon solaire (5) possédant un axe longitudinal et couplé de manière fixe audit arbre primaire de traction et de commande (7) afin de tourner avec celui-ci, et engrenant lesdits premiers pignons planétaires (4), et bloqué contre ledit plateau de blocage (6),
un système de commande constitué d'un ressort de détection (9) accroché audit pignon solaire (5) et au carter fixe ;
un premier embrayage unidirectionnel (19) monté sur ledit rotor cylindrique (10) afin de bloquer ledit carter (21) et de libérer ledit rotor cylindrique ;
un système d'engrenages épicycloïdal arrière comprenant :
des pignons satellites (11) ;
un jeu de plusieurs pignons arrière (13) reliés par des arbres respectifs auxdits pignons satellites (11) ;
un jeu de plusieurs bras pivotants (16) portant lesdits arbres et pignons arrière (13) ;
un second jeu de plusieurs pignons planétaires (14) engagés dans lesdits pignons arrière (13) ;
un croisillon de positionnement (12) maintenant lesdits bras pivotants (16) et ledit second jeu de pignons planétaires, ledit croisillon de positionnement (12) se déployant le long dudit arbre primaire de traction et de commande (7) par l'intermédiaire de ses encoches, sous l'action d'un axe (55) fixé audit croisillon par lesdites encoches et les cannelures de ladite barre cannelée en hélice (8) ;
un pignon central (15) monté sur ledit croisillon de positionnement et s'engageant dans ledit second jeu de pignons planétaires (14) ; et
un arbre externe (18) fixé audit pignon central (15) et engagé dans ledit arbre d'accouplement double (22), qui restitue le couple issu dudit convertisseur de couple ; **caractérisé en ce qu'**une crémaillère en spirale (20) est intégrée à la circonférence dudit rotor cylindrique 10) ;
le système comprenant en outre des tiges de raccordement (17) asservissant lesdits bras pivotants (16) les uns aux autres, et
lesdits pignons satellites (11) engrenant ladite crémaillère (20).

2. Crémaillère en spirale pour un convertisseur de couple mécanique selon la revendication 1, dans laquelle les axes propres desdits arbre primaire de travail et de commande (7), pignon d'entrée (1), premiers pignons planétaires (4), satellites (11), pignons et arbres arrière (13), et seconds pignons planétaires (14) sont parallèles entre eux.

3. Crémaillère en spirale pour un convertisseur de couple mécanique selon la revendication 1, dans laquelle lesdits pignon solaire (5), couronne dentée (2), arbre primaire (7), arbre d'accouplement double (22), plateau de blocage (6), premier embrayage unidirectionnel (19), rotor cylindrique (10), seconde couronne dentée (3), croisillon de positionnement (12), barre centrale cannelée (8) et ledit arbre externe (18) ont tous une longueur d'axe commune.

4. Crémaillère en spirale pour un convertisseur de couple mécanique selon la revendication 1, dans laquelle ledit système de rotor cylindrique et de satellites (11) est un système d'engrenages comprenant :
une crémaillère en spirale (20) intégrée à circonférence de la surface interne dudit rotor cylindrique (10),
un système de pignons satellites engrenant ladite crémaillère (20) et accouplé auxdits arbres et pignons arrière (13), et
des tiges de raccordement (17) asservissant les bras pivotants (16) les uns aux autres.

5. Crémaillère en spirale pour un convertisseur de couple mécanique selon la revendication 1, dans laquelle lesdits bras pivotants (16) pivotent à l'extrémité des bras dudit croisillon (12) et sont asservis les uns aux autres par lesdites tiges de raccordement (17) afin de conserver le même rayon, et sont maintenus en extension par ressort afin que lesdits satellites (11) s'engagent dans la spire de la crémaillère la plus proche (20) ayant une position vectorielle tridimensionnelle, et ce précisément pour chaque position de la cadence d'avancée du croisillon (12).

6. Crémaillère en spirale pour un convertisseur de couple mécanique selon la revendication 1, dans laquelle les satellites (11) sont engagés dans ladite crémaillère (20) et passent de manière cyclique de la fin d'une spire à son début, au niveau de positions angulaires spécifiques où les dents de la première et de la dernière spires coïncident et où plusieurs dents de crémaillère peuvent être détachées sans perdre la séquence, afin d'être en synchronisation avec le même pignon central, transmettant le couple au second système d'engrenages épicycloïdal qui est relié audit arbre externe (18), et audit arbre d'accouplement double (22) qui se trouve en sortie dudit convertisseur de couple.
